# FASCICULE DE BREVET EUROPEEN

(11) **EP 1 977 844 B1**
(45) Date de publication et mention de la délivrance du brevet: **27.05.2009**
(21) Numéro de dépôt: 08305036.9
(22) Date de dépôt: 28.02.2008
(51) Int. Cl.: B23B 5/16

(54) **Dispositif de chanfreinage intérieur de tubes**
Vorrichtung zum Innenentgraten von Rohren
Device for inner chamfering of pipes

(30) Priorité: 04.04.2007 FR 0754256
(43) Date de publication de la demande: 08.10.2008
(73) Titulaire: Eberle (Société par Actions Simplifiée), 67116 Reichstett (FR)
(72) Inventeur: Priester, Claude, 67000 Strasbourg (FR)
(74) Mandataire: Nuss, Pierre

(56) Documents cités:
- EP-A- 1 500 451
- FR-A- 1 351 063
- US-A- 3 563 119

## Description

La présente invention concerne le domaine de la découpe de tubes en papier, carton, en matière synthétique ou autre, destinés à la réalisation de boîtes d'emballage, de fûts ou autres, et a pour objet un dispositif de chanfreinage intérieur de tubes.

Les tubes en papier, carton, en matière synthétique ou autre, qui sont généralement réalisés en continu, sont ultérieurement découpés en vue de la réalisation de tronçons de longueurs identiques ou différentes, en fonction de leur usage définitif, à l'aide d'un dispositif de coupe ou de recoupe de tubes.

A cet effet, le tube à recouper est mis en rotation et un ou plusieurs outils de coupe pénètrent, transversalement à l'axe longitudinal du tube, dans la matière constituant ledit tube jusqu'à ce que la coupe soit faite. Pour éviter la déformation du tube pendant la coupe, appelée ovalisation, et l'arrachement de la matière à l'intérieur du tube, il est prévu dans ce dernier une contre-pièce appelée mandrin de coupe, qui est placée au droit du ou des outils de coupe.

Les outils de coupe utilisés sont généralement réalisés en acier traité de dureté élevée et présentent un biseau simple ou double destiné à faciliter leur pénétration dans le tube à couper.

Actuellement, il existe différents procédés de coupe mettant en oeuvre soit un ou plusieurs couteaux circulaires libres en rotation, soit un ou plusieurs couteaux circulaires fixes, le tube étant monté sur un mandrin en matière synthétique ou en acier traité rectifié à haute dureté de surface.

Les procédés et dispositifs de coupe connus permettent généralement l'obtention d'une coupe relativement régulière sans bavure au moins sur la périphérie externe des tubes coupés. Cependant, sur la surface interne de l'extrémité des tubes, il peut se former des bavures dues notamment à la fin de la pénétration du ou des couteaux mis en oeuvre dans la matière du tube, ce qui peut être gênant lors de leur utilisation ultérieure, notamment s'ils doivent être munis de bouchons ou si pour cette utilisation ils doivent être montés pratiquement sans jeu sur des mandrins d'entraînement.

Si la coupe est effectuée en présence d'un mandrin de coupe en matière synthétique, le ou les couteaux peuvent réaliser un parcours complet dans toute l'épaisseur de paroi des tubes, de sorte que les bavures sont moins importantes, voire inexistantes mais ils réalisent alors, à chaque coupe, une empreinte dans le mandrin de coupe, ce qui a pour effet d'engendrer un marquage important après un certain nombre de coupes. Ce marquage se traduit par une rainure à laquelle correspond, après les premières coupes, sur les tronçons de tubes découpés, une bavure intérieure due à la déchirure suite à l'action du ou des couteaux.

Si le mandrin de coupe est réalisé en acier traité, le ou les outils de coupe entrent en contact dudit mandrin à la fin de chaque opération de coupe et roulent sur ledit mandrin de coupe, de sorte que leur arête de coupe s'use rapidement. En effet, du fait du contact de l'arête dure avec une surface dure, ladite arête s'effrite et présente des dégradations analogues à de minuscules dents de scie, de sorte qu'au bout de quelques opérations de coupe, l'aspect des coupes réalisées est dégradé et chaque coupe entraîne un dégagement de poussière.

Pour remédier à ces inconvénients, notamment dans le cas du tronçonnage de tubes en matière synthétique, il a été proposé, en particulier par EP-A-1 500 451 un procédé et un dispositif de chanfreinage extérieur et intérieur de tels tubes.

A cet effet, il est procédé, dans un premier temps, au tronçonnage d'un tube, puis un outil de chanfreinage réalise un chanfrein extérieur sur les deux extrémités adjacentes de tronçons de tubes ainsi tronçonnés, les deux tronçons sont alors déplacés en translation dans le sens d'un écartement de leurs bords adjacents, afin de permettre l'introduction de l'outil de chanfreinage entre lesdites extrémités qui sont ensuite à nouveau rapprochées. Ensuite, les tronçons de tubes sont remis en rotation et l'outil de chanfreinage est déplacé en direction de la paroi interne desdits tronçons afin de réaliser un chanfrein interne.

Ce procédé et ce dispositif permettent, certes, l'obtention d'un fini des extrémités parfait mais, la mise en oeuvre de ce procédé est relativement complexe du fait qu'elle nécessite plusieurs étapes d'usinage, ce qui renchérit considérablement les coûts de production.

La présente invention a pour but de pallier ces inconvénients en proposant un dispositif de chanfreinage intérieur de tubes permettant l'obtention de chanfreins intérieurs de très bonne qualité pendant l'opération de tronçonnage, en évitant une succession d'opérations d'usinage et de manutention des tronçons de tubes.

A cet effet, le dispositif de chanfreinage intérieur est caractérisé en ce qu'il est constitué sous forme d'un coulisseau portant un outil de chanfreinage et logé dans le mandrin de coupe supportant le tube à tronçonner, dans le plan transversal de tronçonnage, ce coulisseau étant guidé en déplacement transversal par rapport à l'axe longitudinal du mandrin et déplaçable dans ce dernier, contre l'action d'au moins un ressort de rappel, par l'intermédiaire du couteau de coupe, pendant la fin de l'opération de tronçonnage des tubes et l'outil de chanfreinage réalisant simultanément un chanfrein intérieur sur le tronçon de tube coupé et sur l'extrémité de tube restant sur le mandrin.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en élévation frontale, à plus grande échelle et en coupe du dispositif de chanfreinage conforme à l'invention ;
la figure 2 est une vue partielle en plan un dispositif de coupe ou de recoupe de tubes équipée du dispositif de chanfreinage suivant la figure 1, et la
la figure 3 est une vue en coupe suivant A-A de la figure 2.

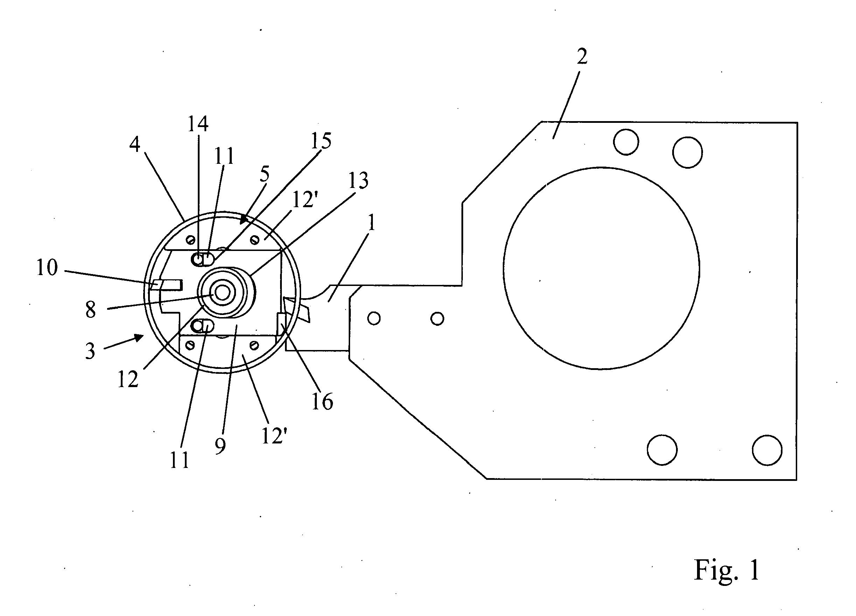

Les figures 1 à 3 des dessins annexés représentent, à titre d'exemple, un dispositif de coupe ou de recoupe de tubes, qui est essentiellement constitué par un outil de coupe 1 monté sur un chariot porte-outil 2, actionné au moyen d'un vérin ou tout autre moyen de translation (non représenté) et déplaçable transversalement à un mandrin de coupe 3 portant un tube à tronçonner 4 et par un dispositif de chanfreinage intérieur 5. De manière connue, le déplacement du chariot porte-outil 2 est réglable en fonction de l'épaisseur du tube à couper ou à recouper et son positionnement préalable est effectué par l'intermédiaire d'une vis de réglage actionnée au moyen d'un volant ou d'un levier de manoeuvre. En outre, le tube à tronçonner 4 est maintenu par serrage sur le mandrin de coupe 3, d'une part à son extrémité arrière (non visible sur les dessins) au moyen de mors de serrage et d'entraînement et, d'autre part, près de son extrémité libre, par l'intermédiaire d'une bague expansible 6, montée sur un palier rotatif 7 et pouvant être serrée sur ce palier 7 par l'intermédiaire de l'extrémité 3' du mandrin de coupe 3, qui est actionné à cet effet au moyen d'un tirant 8 logé concentriquement dans le mandrin 3 et formant un palier de rotation de ce dernier. Le tirant 8 est, de manière connue, relié à un vérin de commande non représenté, vérin dont le déplacement permet la mise sous compression ou le relâchement de la compression de la bague expansible 6, en vue d'une application de cette dernière sur la face interne de l'extrémité de tube à couper ou à tronçonner 4 et la libération de cette extrémité après son tronçonnage.

Conformément à l'invention, le dispositif de chanfreinage intérieur est constitué sous forme d'un coulisseau 9 portant un outil de chanfreinage 10 et logé dans le mandrin de coupe 3 supportant le tube à tronçonner, dans le plan transversal de tronçonnage, ce coulisseau 9 étant guidé en déplacement transversal par rapport à l'axe longitudinal du mandrin 3 et déplaçable dans ce dernier, contre l'action d'au moins un ressort de rappel 11, par l'intermédiaire de l'outil de coupe 1, pendant la fin de l'opération de tronçonnage des tubes et l'outil de chanfreinage réalisant simultanément un chanfrein intérieur sur le tronçon de tube coupé 4' et sur l'extrémité de tube 4 restant sur le mandrin 3.

Le coulisseau 9 est monté sur un palier de support 12 solidaire en rotation du tirant 8 d'actionnement de l'extrémité 3' du mandrin de coupe 3, est guidé sur ce dernier au moyen de deux mors parallèles de guidage 12' du palier de support 12, s'étendant de part et d'autre dudit coulisseau 9, parallèlement à sa direction de déplacement transversal et entoure ledit palier de support 12 par l'intermédiaire d'un trou oblong central 13. Ainsi, le coulisseau 9 est parfaitement maintenu pendant son mouvement de déplacement à l'intérieur du mandrin de coupe 3, en particulier lors du chanfreinage intérieur et est assuré contre tout mouvement de basculement autour de l'axe longitudinal du mandrin de coupe 3 et du tirant 8.

Pour assurer le maintien en position de repos du coulisseau 9 ou son retour dans cette position, il est prévu sur le palier de support 12 au moins une broche 14, s'étendant parallèlement à l'axe longitudinal du mandrin de coupe 3 et du tirant 8 et coopérant avec une rainure de guidage 15 disposée orthogonalement à l'axe longitudinal du mandrin 3 et du tirant 8, cette broche 14 étant chargée, en outre, suivant l'axe longitudinal de la rainure de guidage 15, par un ressort de rappel 11 disposé dans un logement du coulisseau 9, en prolongement de ladite rainure de guidage 15.

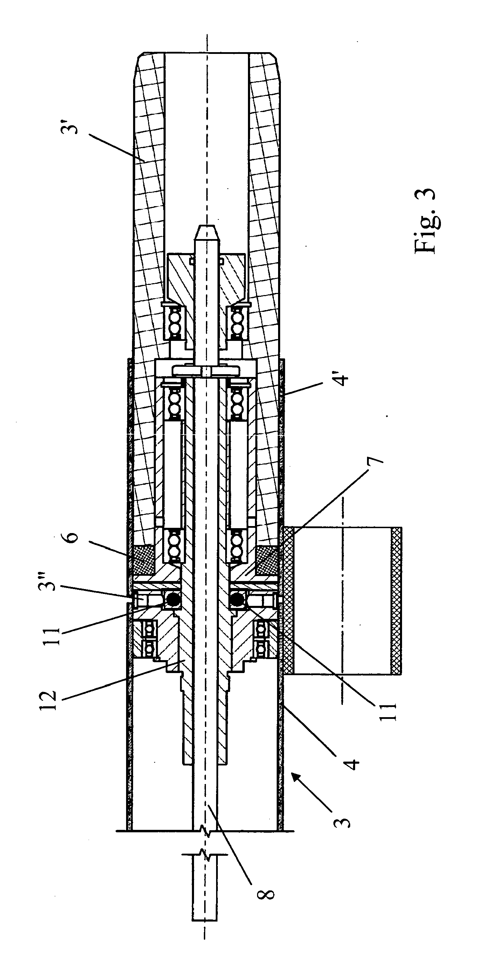

De préférence, le rappel en position du coulisseau 9 est assuré par deux broches 14 s'étendant symétriquement par rapport au plan horizontal passant par l'axe longitudinal du mandrin de coupe 3 et du tirant 8 (figure 3). Un tel mode de réalisation permet, en coopération avec les mors parallèles de guidage 12', d'assurer de manière fiable le guidage du coulisseau 9 pendant l'opération de chanfreinage et son retrait en position de repos après ladite opération, sans risque de blocage par arc-boutement, les efforts de rappel étant parfaitement équilibrés.

L'outil de chanfreinage 10 est monté sur le coulisseau 9 de telle manière que ses arêtes de coupe s'étendent dans un plan horizontal parallèle au plan horizontal de l'axe longitudinal du mandrin de coupe 3 et du tirant 8 et sont, en position de repos du coulisseau 9, en retrait par rapport à l'enveloppe définie par la paroi interne du tube 4. De préférence, le coulisseau 9 est pourvu, à son bord opposé à celui portant l'outil de chanfreinage 10, d'une butée 16 destinée à coopérer avec la face avant du couteau de coupe ou de tronçonnage 1, sous l'arête de coupe de ce dernier (figure 1).

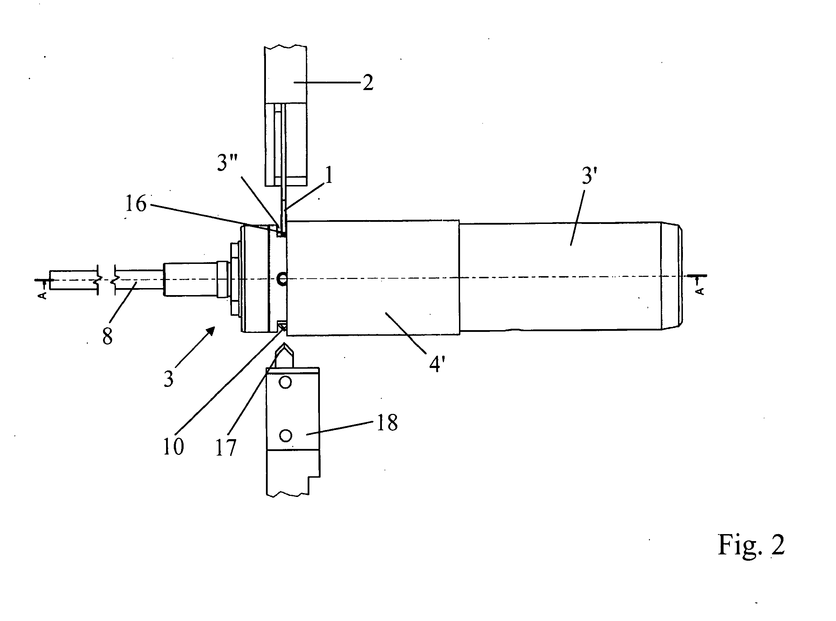

La figure 2 des dessins annexés représente partiellement l'extrémité d'une machine de coupe ou de recoupe de tubes en faisant apparaître uniquement un tronçon de tube 4' qui vient d'être coupé par l'intermédiaire de l'outil de coupe 1. Le reste du tube subsistant sur le mandrin de coupe 3 n'est pas représenté pour une meilleure compréhension du fonctionnement du dispositif du chanfreinage intérieur selon l'invention.

Après l'opération de coupe du tronçon 4', le chariot porte-outil 2 poursuit son mouvement de pénétration dans la fente 3" du mandrin de coupe 3 et vient s'appuyer par la partie de l'outil de coupe 1 s'étendant sous l'arête de ce dernier, contre la butée 16 du coulisseau 9. Il s'ensuit que le coulisseau 9 est déplacé transversalement à l'axe longitudinal du mandrin de coupe 3, ce qui a pour effet de pousser les arêtes de coupe de l'outil de chanfreinage 10 contre l'extrémité de la paroi interne du tronçon de tube 4' et ainsi de réaliser un chanfrein intérieur aussi bien sur le tronçon de tube 4' que sur l'extrémité correspondante du tube 4 restant sur le mandrin de coupe 3.

A la fin de cette opération, l'outil de tronçonnage est actionné en déplacement inverse vers sa position de repos, de sorte que le coulisseau est libéré de la charge qui s'exerçait sur lui et qu'il recule, sous l'action des ressorts de rappel 11 agissant sur les broches 14, jusqu'à sa position de repos dans le mandrin de coupe 3. Le tube à tronçonner 4 peut alors être déplacé d'une nouvelle longueur prédéterminée de tronçon de tube à couper ou à tronçonner en vue de l'opération de tronçonnage et de chanfreinage suivante.

Comme le montre plus particulièrement la figure 2 des dessins annexés et selon une variante de réalisation de l'invention, l'actionnement du dispositif de chanfreinage intérieur par l'outil de coupe 1 peut être synchronisé avec la commande simultanée d'un outil de chanfreinage extérieur 17 monté sur un chariot 18, commandé par un vérin (non représenté) ou analogue, la commande d'actionnement de l'outil de chanfreinage extérieur pouvant être déclenchée par une butée de fin de course ou par un détecteur de position coopérant avec le chariot porte-outil 2 de l'outil de coupe 1. Ainsi, aussi bien le chanfrein intérieur qu'un chanfrein extérieur peuvent être exécutés simultanément en une seule opération de coupe ou de tronçonnage, sans nécessiter une quelconque opération intermédiaire de positionnement d'un outil et/ou d'un tronçon de tube.

Conformément à une variante de l'invention, non représentée aux dessins annexés, il est également possible de munir l'outil de coupe 1, qui actionne le coulisseau 9 de support de l'outil de chanfreinage intérieur 10, d'un outil de chanfreinage extérieur s'étendant à une distance de l'arête de l'outil de coupe 1 égale à la distance à parcourir par ladite arête dudit de l'outil de coupe 1 jusqu'à la fin de l'usinage du chanfrein intérieur par l'outil de chanfreinage intérieur 10. Dans un tel cas, il suffit d'effectuer un seul réglage préalable de l'outil de coupe et de l'outil de chanfreinage extérieur solidarisé avec cet outil de coupe pour pouvoir, lors de l'opération de tronçonnage et effectuer simultanément, avec un seul chariot porte-outil, toutes les opérations nécessaires.

Grâce à l'invention, il est possible de réaliser un dispositif de chanfreinage intérieur ne nécessitant aucun déplacement des tubes coupés, ledit chanfreinage intérieur étant exécuté directement à la suite de l'opération de tronçonnage ou de coupe sans aucun arrêt machine ni aucun déplacement des tronçons de tubes.

En outre, grâce à l'invention, il est possible de réaliser de manière simultanée les chanfreins intérieurs et extérieurs.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif de chanfreinage intérieur de tubes **caractérisé en ce qu'**il est constitué sous forme d'un coulisseau (9) portant un outil de chanfreinage (10) et logé dans un mandrin de coupe (3) supportant un tube à tronçonner, dans le plan transversal de tronçonnage, ce coulisseau (9) étant guidé en déplacement transversal par rapport à l'axe longitudinal du mandrin de coupe (3) et déplaçable dans ce dernier, contre l'action d'au moins un ressort de rappel (11), par l'intermédiaire d'un outil de coupe (1), pendant la fin de l'opération de tronçonnage des tubes et l'outil de chanfreinage réalisant simultanément un chanfrein intérieur sur le tronçon de tube coupé (4') et sur l'extrémité de tube (4) restant sur le mandrin (3).

2. Dispositif, suivant la revendication 1, **caractérisé en ce que** le coulisseau (9) est monté sur un palier de support (12) solidaire en rotation d'un tirant (8) d'actionnement d'une extrémité (3') du mandrin de coupe (3), est guidé sur ce dernier au moyen de deux mors parallèles de guidage (12') du palier de support (12), s'étendant de part et d'autre dudit coulisseau (9), parallèlement à sa direction de déplacement transversal et entoure ledit palier de support (12) par l'intermédiaire d'un trou oblong central (13).

3. Dispositif, suivant la revendication 2, **caractérisé en ce qu'**il est prévu sur le palier de support (12) au moins une broche (14), s'étendant parallèlement à l'axe longitudinal du mandrin de coupe (3) et du tirant (8) et coopérant avec une rainure de guidage (15) disposée orthogonalement à l'axe longitudinal du mandrin (3) et du tirant (8), cette broche (14) étant chargée, en outre, suivant l'axe longitudinal de la rainure de guidage (15), par un ressort de rappel (11) disposé dans un logement du coulisseau (9), en prolongement de ladite rainure de guidage (15).

4. Dispositif, suivant la revendication 2, **caractérisé en ce que** le rappel du coulisseau (9) est assuré par deux broches (14) s'étendant symétriquement par rapport au plan horizontal passant par l'axe longitudinal du mandrin de coupe (3) et du tirant (8).

5. Dispositif, suivant l'une quelconque des revendications 1 et 2, **caractérisé en ce que** l'outil de chanfreinage (10) est monté sur le coulisseau (9) de telle manière que ses arêtes de coupe s'étendent dans un plan horizontal parallèle au plan horizontal de l'axe longitudinal du mandrin de coupe (3) et du tirant 8 et sont, en position de repos du coulisseau (9), en retrait par rapport à l'enveloppe définie par la paroi interne du tube (4).

6. Dispositif, suivant la revendication 5, **caractérisé en ce que** le coulisseau (9) est pourvu, à son bord opposé à celui portant l'outil de chanfreinage (10), d'une butée (16) destinée à coopérer avec la face avant de l'outil de coupe ou de tronçonnage (1), sous l'arête de coupe de ce dernier.

7. Dispositif, suivant l'une quelconque des revendications 1, 2, 5 et 6, **caractérisé en ce que** l'actionnement du dispositif de chanfreinage intérieur par l'outil de coupe (1) est synchronisé avec la commande simultanée d'un outil de chanfreinage extérieur (17) monté sur un chariot (18), commandé par un vérin ou analogue, la commande d'actionnement de l'outil de chanfreinage extérieur étant déclenchée par une butée de fin de course ou par un détecteur de position coopérant avec un chariot porte-outil (2) de l'outil de coupe (1).

8. Dispositif, suivant l'une quelconque des revendications 1, 2, 5 et 6, **caractérisé en ce que** l'outil de coupe (1), qui actionne le coulisseau (9) de support de l'outil de chanfreinage intérieur (10), est muni d'un outil de chanfreinage extérieur s'étendant à une distance de l'arête de l'outil de coupe (1) égale à la distance à parcourir par ladite arête dudit outil de coupe (1) jusqu'à la fin de l'usinage du chanfrein intérieur par l'outil de chanfreinage intérieur (10).

## Claims

1. Device for the internal chamfering of tubes, **characterised in that** it consists of a slide block (9) which carries a chamfering tool (10) and is fitted in a cutting mandrel (3) which supports a tube to be cut into sections in the transverse cutting plane, the said slide block (9) being guided in transverse displacement relative to the longitudinal axis of the cutting mandrel (3) and being able to move within the latter against the action of at least one return spring (11) through the intermediary of a cutting tool (1) during the end of the tube-cutting operation, such that the chamfering tool at the same time produces an internal chamfer on the section of tube cut off (4') and on the end of the tube (4) that remains on the mandrel (3).

2. Device according to Claim 1, **characterised in that** the slide block (9) is mounted on a supporting stage (12) attached rotationally fixed to a tie-rod (8) that actuates one end (3') of the cutting mandrel (3), and is guided on the latter by means of two parallel grips (12') that guide the supporting stage (12), extending on either side of the said slide block (9) parallel to its transverse movement direction and surrounding the said supporting stage (12) with an oblong central hole (13).

3. Device according to Claim 2, **characterised in that** at least one pin (14) is provided on the supporting stage (12), which extends parallel to the longitudinal axis of the cutting mandrel (3) and the tie-rod (8) and co-operates with a guide groove (15) arranged particularly to the longitudinal axis of the mandrel (3) and the tie-rod (8), the said pin (14) also being loaded along the longitudinal axis of the guide groove (15) by a return spring (11) arranged in a recess in the slide block (9) that extends in line with the said guide groove (15).

4. Device according to Claim 2, **characterised in that** the return of the slide block (9) is ensured by two pins (14) that extend symmetrically relative to the horizontal plane passing through the longitudinal axis of the cutting mandrel (3) and the tie-rod (8).

5. Device according to either of Claims 1 and 2, **characterised in that** the chamfering tool (10) is mounted on the slide block (9) in such manner that its cutting edges extend in a horizontal plane parallel to the horizontal plane containing the longitudinal axis of the cutting mandrel (3) and the tie-rod (8) and, in the rest position of the slide block (9), are set back relative to the envelope defined by the inside wall of the tube (4).

6. Device according to Claim 5, **characterised in that** at its edge opposite the edge carrying the chamfering tool (10) the slide block (9) is provided with a stop abutment (16) designed to co-operate with the front face of the cutting or sectioning tool (1), under the cutting edge of the latter.

7. Device according to any of Claims 1, 2, 5 and 6, **characterised in that** the actuation of the internal chamfering device by the cutting tool (1) is synchronised with the simultaneous control of an external chamfering tool (17) mounted on a carriage (18) controlled by a jack or suchlike, the actuation of the external chamfering tool being initiated by an end-of-travel abutment or by a position detector that co-operates with a tool-carrying carriage (2) of the cutting tool (1).

8. Device to any of Claims 1, 2, 5 and 6, **characterised in that** the cutting tool (1) that actuates the slide block (9) supporting the internal chamfering tool (10) is fitted with an external chamfering tool that extends a distance away from the edge of the cutting tool (1) equal to the distance to be covered by the said edge of the said cutting tool (1) as far as the end of the machining of the internal chamfer by the internal chamfering tool (10).

## Patentansprüche

1. Vorrichtung zum Innenentgraten von Rohren,
**dadurch gekennzeichnet, dass**
diese in Form eines Schiebers (9) ausgebildet ist, dieser ein Entgratungswerkzeug (10) umfasst und in einem Schneidring (3) angeordnet ist, der ein Rohr für einen Schneidevorgang in Querrichtung zu diesem hält, wobei der Schieber (9) in Querrichtung im Bezug auf die Längsachse des Schneidringes (3) geführt wird und in diesem verfahrbar gegen wenigstens eine Rückzugfeder (11) mittels eines Schneidewerkzeuges (1) ist, wobei während der Endphase des Schneidevorgangs der Rohre, durch das Schneidewerkzeug gleichzeitig eine Innenentgratung des Abschnittes des geschnittenen Rohres (4') und des Endbereiches des Rohres (4), das auf dem Schneidring (3) verbleibt, erreicht wird.

2. Vorrichtung nach Anspruch 1,
**dadurch gekennzeichnet, dass**
der Schieber (9) auf ein Stützlager (12) montiert ist, das zusammenwirkend mit einem Bolzen (8) durch den Antrieb eines Endbereiches (3') des Schneidringes (3) rotiert, und durch diesen und mittels zwei parallelen Führungselementen (12') des Stützlagers (12), das sich über die Länge des Schiebers (9) erstreckt, parallel zur Verschiebung in Querrichtung geführt wird und der Schieber das Stützlager (12) durch ein längliches zentrales Loch (13) umschließt.

3. Vorrichtung nach Anspruch 2,
**dadurch gekennzeichnet, dass**
auf dem Stützlager (12) wenigstens ein Stift (14) angeordnet ist, der sich parallel zur Längsachse des Schneidringes (3) und des Bolzens (8) erstreckt und mit einer Führungsnut (15) zusammenwirkt, die orthogonal an der Längsachse des Schneidringes (3) und des Bolzens (8) angeordnet ist, wobei der Stift (14) unter anderem durch eine Rückzugfeder (11), der Längsachse der Führungsnut (15) folgend, vorgespannt ist und die Rückzugfeder in einer die Führungsnut verlängernden Aussparung des Schiebers (9) angeordnet ist.

4. Vorrichtung nach Anspruch 2,
**dadurch gekennzeichnet, dass**
die Rückstellung des Schiebers (9) durch zwei Stifte (14) gewährleistet ist, die sich symmetrisch im Bezug auf die horizontale Ebene zwischen der Längsachse des Schneidringes (3) und des Bolzens (8) erstrecken.

5. Vorrichtung nach einem der Ansprüche 1 oder 2,
**dadurch gekennzeichnet, dass**
das Entgratungswerkzeug (10) auf dem Schieber (9) derart montiert ist, dass sich dessen Schneidekanten in einer horizontalen Ebene parallel zu der horizontalen Ebene der Längsachse des Schneidringes (3) und des Bolzens (8) erstrecken und diese im Ruhezustand des Schiebers (9) im Bezug auf die Hülle, die die Innenwandung des Rohres (4) definiert, zurückgezogen sind.

6. Vorrichtung nach Anspruch 5,
**dadurch gekennzeichnet, dass**
der Schieber (9) an dem Randbereich, der dem das Entgratungswerkzeug (10) aufweisenden Randbereich gegenüberliegt, mit einem Begrenzer (16) ausgestattet ist, der mit der Vorderseite des Schneidewerkzeuges (1) unter dessen Schneidekante zusammenwirkt.

7. Vorrichtung nach einem der Ansprüche 1, 2, 5 oder 6,
**dadurch gekennzeichnet, dass**
die Betätigung der Vorrichtung zum Innenentgraten durch das Schneidewerkzeug (1) mit einer gleichzeitigen Betätigung eines äußeren Entgratungswerkzeuges (17), das auf einen Schlitten (18) montiert ist und durch eine Spindel oder analog angesteuert wird, synchron verläuft, wobei die Initiierung für die Betätigung des äußeren Entgratungswerkzeuges durch einen Endschalter oder durch einen Positionsdetektor ausgelöst wird, der mit dem Werkzeughalterschlitten (2) für das Schneidewerkzeug (1) zusammenwirkt.

8. Vorrichtung nach einem der Ansprüche 1, 2, 5 oder 6,
**dadurch gekennzeichnet, dass**
das Schneidewerkzeug (1), das den Schieber (9) des inneren Entgratungswerkzeuges (10) betätigt, mit einem äußeren Entgratungswerkzeug ausgestattet ist, das sich über eine Länge der Kante des Schneidewerkzeuges (1) erstreckt, die der Strecke gleichkommt, die durch die Kante des Schneidewerkzeuges (1) abzufahren ist, bis zum Ende der Innenentgratungsbearbeitung durch das innere Entgratungswerkzeug (10).
